# EUROPEAN PATENT APPLICATION

(11) **EP 1 783 635 A1**
(43) Date of publication of application: **09.05.2007**
(21) Application number: 05300894.2
(22) Date of filing: 07.11.2005
(51) Int. Cl.: G06F 17/30

(54) **Method and system for distributing multimedia content**

(71) Applicant: Thomson Licensing S.A., 92100 Boulogne-Billancourt (FR)
(72) Inventor: Lebegue, Xavier, 78350, Jouy-en-Josas (FR); Daugeras, Emmanuel, 92330, Sceaux (FR)
(74) Representative: Thies, Stephan

(57) **Abstract**

The invention relates to a method and a system for securely distributing multimedia content.

According to the invention, in a method and a system for distributing multimedia content, wherein multimedia content is recorded on a recording medium upon request at a recording terminal, a main part of the multimedia content is retrieved (3) from at least one local storage device, a remaining part of the multimedia content is retrieved (4) from at least one remote storage device (31), and the complete multimedia content is recorded (6) on a recording medium at the recording terminal.

## Description

The invention relates to a method and a system for securely distributing multimedia content, and more specifically to a method and a system for securely distributing audio/video data.

A plurality of such methods, especially for renting or selling movies, are known. For example, US 2004/0064377 discloses a kiosk machine that allows customers to browse a movie database, view movie descriptions, and then have a copy of the movie recorded on a DVD disk. The movies are either stored locally within the kiosk or retrieved from a central movie server via a network in case a requested movie is not yet available locally. A drawback of this system is the possibility that a kiosk might be hacked, which would give the hacker access to the locally stored movies. If, however, the movies are not stored within the kiosk, an enormous amount of data traffic is generated as each requested movie has to be retrieved from the central movie server.

It is an object of the present invention to propose a method and a system for distributing multimedia content, which overcome the above drawback.

According to a first aspect of the invention, a method for distributing multimedia content using a recording terminal is proposed, including the steps of:
- retrieving a main part of the multimedia content from at least one local storage device;
- retrieving a remaining part of the multimedia content from at least one remote storage device; and
- recording the complete multimedia content on a recording medium at the recording terminal.

According to a further aspect of the invention, a recording terminal for distributing multimedia content is proposed, the recording terminal including:
- means for retrieving a main part of the multimedia content from at least one local storage device;
- means for retrieving a remaining part of the multimedia content from at least one remote storage device; and
- a recording device for recording the complete multimedia content on a recording medium.

By storing only the main parts of the multimedia content locally within the recording terminals, the locally available multimedia content is worthless for potential hackers, as some parts are missing. At the same time, as only a small amount of data needs to be retrieved remotely, only some additional data traffic is generated. The remaining part of the multimedia content advantageously includes at least one of segments of audio and segments of video data, menu data, navigation data, and bonus material. In all cases the main part of the multimedia content is not very interesting for potential hackers. The segments of video data advantageously include at least on of I-pictures and P-pictures. In case of I-pictures the complete locally stored multimedia content is unusable. However, this means that a relatively large amount of data has to be retrieved remotely. In case of P-pictures a large amount of the locally stored multimedia content is unusable, while only a smaller amount of data has to be retrieved remotely. Likewise, the remaining part of the multimedia content may include GOPs (groups of pictures), e.g. the first GOP of each scene. If the locally stored part of the multimedia content is encrypted, the remaining part of the multimedia content preferably includes the decryption key necessary for decrypting the multimedia content for recording. In this way a further increased security is achieved.

A further advantage is that the remote parts of the multimedia content may be customized for the specific recording operation, e.g. by inserting unique identifiers, watermarks, special metadata identifying the customer or giving details about the specific transaction or the like. This allows to track an illegal copy of the multimedia content, which may be made from the rented multimedia content, to a specific customer. Of course, at least some of the above information, e.g. watermarks, transaction or customer information, may also be embedded in the multimedia content locally within the recording terminals.

Favorably, two or more recording terminals use a shared storage device. This is achieved using a local network, for example. The locally stored multimedia content will generally be the one which is most frequently requested, and/or which has been requested recently. Multimedia content which is not stored locally is preferably retrieved from one or more of the central servers. The above solutions allow to offer the customer a large selection of multimedia content, while at the same time reducing the amount of storage space needed for the recording terminals. In addition, by distributing at least some items of multimedia content over more than one storage device, security is further increased, as a plurality of storage devices would have to be stolen to obtain the multimedia content.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: illustrates a method according to the invention for renting movies;

- Fig. 2: schematically shows a DVD kiosk implementing a method according to the invention; and
- Fig. 3: depicts a network of DVD kiosks.

In the following the invention is explained for a method for renting or selling a movie on a DVD. Of course, the invention is not limited to this example. The invention is likewise applicable to other types of multimedia content, such as music, software, games, pictures, text, or other types of data. Similarly, recording can also be performed on other types of recording media, e.g. other types of optical disks (Compact Disk, BluRay Disk, High Density Digital Versatile Disk, Holographic Disk or Card, etc.), tapes, storage cards, etc.

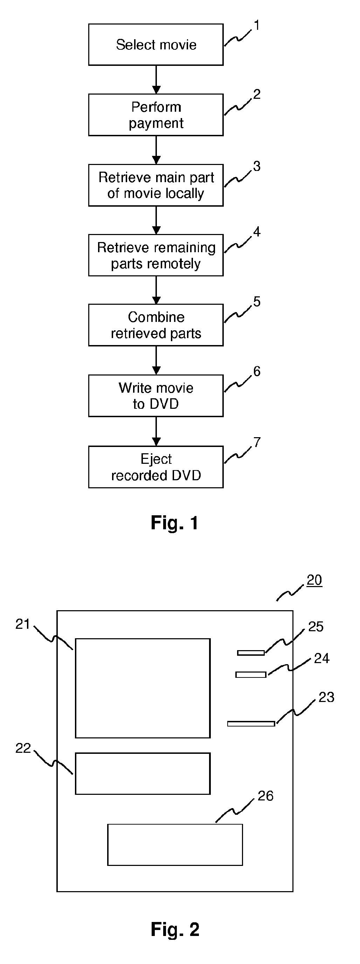

Fig. 1 illustrates a method according to the invention for renting or selling movies. After selecting 1 a movie, the customer has to perform payment 2. After payment the main parts of the selected movies are retrieved 3 from at least one local storage device, e.g. a hard disk drive within the recording terminal and/or a hard disk drive accessible via a local network. The remaining parts are then retrieved 4 remotely from one or more central servers. Of course, the steps can also be performed at the same time or in reverse order. When all parts of the selected movies have been retrieved 3, 4, they are combined 5 and recorded 6 on a recordable DVD. After recording 6 the recorded DVD is ejected 7 and handed out to the customer.

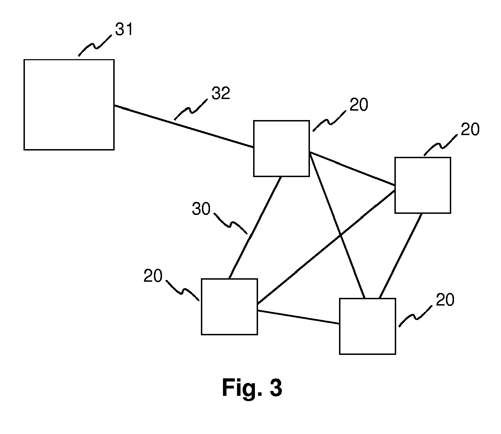

In Fig. 2 a DVD kiosk 20 implementing a method according to the invention is shown schematically. The kiosk 20 has a display 21 and a keyboard 22 for interaction with a customer. Of course, other types of user interface can also be employed, e.g. a touch screen etc. The kiosk is provided with a coin/bill acceptor 24 and/or credit card reader 25 for payment. After selection of one or more movies and payment the selected movies are recorded by a recording device 23 on a recordable DVD, which is loaded from a disk repository (not shown). The recording device 23 of the kiosk 20 preferably is a high speed recording device, which is able to record the movies with a couple of minutes, preferably within one minute. It may also include a printing device (not shown) for providing the recorded DVD with a label and/or for printing a jewel case jacket, especially for the case that the user chooses to buy a movie. Preferably, the label and the jewel case jacket can also be ordered via mail-order. The kiosk includes a storage device 26 for storing the main parts of at least some of the available movies. Before recording the remaining, missing parts of a movie are retrieved from at least one central server, e.g. using a network connection. This is described in more detail with reference to Fig. 3.

As indicated before, at least the main parts of some of the available movies are stored locally in the storage device 26 within the kiosk, e.g. on a hard disk drive, for fast access. The missing parts of a movie are retrieved from one or more central servers 31, e.g. using DSL, fiber or satellite connections 32. By connecting a plurality of adjacent kiosks 20, as shown in Fig. 3, using as an example a gigabit Local Area Network 30, sharing of the available storage space is enabled. This increases the number of locally available movies. At the same time each movie may be distributed over a plurality of storage devices to increase security. The locally available movies are generally those which are most frequently requested. Movies that are not available locally can preferably also be retrieved from the central servers 31 using one or more of the available connections 32. The kiosk 20 preferably offers the possibility to check for the availability of a specific movie at a specific kiosk or within a given area. The available connections 32 are preferably shared between two or more adjacent kiosks to reduce the number of necessary connections. As alternatives, requested movies can be made available to the kiosk by postal updates using dedicated recording media, or by internet updates using regular ADSL. Especially in these cases the kiosk offers the possibility of pre-ordering movies, as the updates require a certain amount of time. Alternatively or additionally, the possibility of a remote checking for the availability of a specific movie and pre-ordering, e.g. via internet, is provided. In any case advantageously the customer is informed when a pre-ordered movie will be available at a specific kiosk 20. The pre-ordered movie is then available for recording for at least a specified amount of time, e.g. three days. However, if sufficient storage space is available, the pre-ordered movie can also be kept locally for an unlimited time or until the storage space is needed for another movie.

## Claims

1. Method for distributing multimedia content using a recording terminal (20), **including** the steps of:
- retrieving (3) a main part of the multimedia content from at least one local storage device (26);
- retrieving (4) a remaining part of the multimedia content from at least one remote storage device (31); and
- recording (6) the complete multimedia content on a recording medium at the recording terminal (20).

2. Method according to claim 1, wherein the remaining part of the multimedia content includes at least one of segments of audio and segments of video data, menu data, navigation data, bonus material, and decryption keys.

3. Method according to claim 1 or 2, further including the step of providing the remaining part of the multimedia content with security features upon retrieval from the at least one remote storage device.

4. Method according to claim 3, wherein the security features include at least one of watermarks and unique identifiers.

5. Method according to one of claims 1 to 4, further including the step of providing the remaining part of the multimedia content with metadata.

6. Method according to claim 5, wherein the metadata include customer and/or transaction information.

7. Method according to one of claims 1 to 6, wherein the local storage device (26) is connected to the recording terminal (20) via a local network.

8. Method according to one of claims 1 to 7, wherein the multimedia content is distributed over a plurality of local storage devices (26).

9. Recording terminal (20) for distributing multimedia content, including:
- means for retrieving a main part of the multimedia content from at least one local storage device (26);
- means for retrieving a remaining part of the multimedia content from at least one remote storage device (31); and
- a recording device (23) for recording the complete multimedia content on a recording medium.

10. Recording terminal (20) according to claim 8, wherein at least one local storage device (26) is connected to the recording terminal (20) via a local network.
